# EUROPÄISCHE PATENTSCHRIFT

(11) **EP 0 735 121 B1**
(45) Veröffentlichungstag und Bekanntmachung des Hinweises auf die Patenterteilung: **23.05.2001**
(21) Anmeldenummer: 96103551.6
(22) Anmeldetag: 07.03.1996
(51) Int. Cl.: C09J 7/02, F16B 47/00

(54) **Verfahren zum verdeckten Verkleben mittels eines Klebfolien-Abschnitts für eine rückstandsfreie und beschädigungslose wiederablösbare Verklebung**
Method of concealed bonding using a stretch release adhesive tape allowing residue-free and non-destructive removal
Procedé de collage non visible au moyen d'un morceau de ruban adhésif pour la réalisation d'un collage dètachable, non destructif et sans résidu

(30) Priorität: 28.03.1995 DE 19511288
(43) Veröffentlichungstag der Anmeldung: 02.10.1996
(73) Patentinhaber: Beiersdorf Aktiengesellschaft, 20245 Hamburg (DE)
(72) Erfinder: Lühmann, Bernd, Dr., 22846 Norderstedt (DE)

(56) Entgegenhaltungen:
- WO-A-92/11333
- WO-A-94/21157
- DE-A- 4 233 872

## Beschreibung

Die Erfindung betrifft ein Verfahren zum verdeckten Verkleben mittels eines Klebfolien-Abschnittes für eine rückstandsfreie und beschädigungslos wiederablösbare Verklebung.

Klebfolien, die durch Ziehen in der Verklebungsebene wiederablösbar sind, sind bekannt und im Handel erhältlich, so als "Power Strips" ® von der Beiersdorf AG.

So beschreibt US 4,024,312 ein Selbstklebeband mit einem dehnbaren und elastischen Träger aus einem Blockcopolymeren, insbesondere für Anwendungen im medizinischen Bereich, wo ein schmerzloses Abziehen von der Haut erwünscht ist.

Weiterhin beschreibt DE 33 31 016 A1 eine Klebfolie für wiederlösbare Klebbindungen, die es gestattet, daß eine damit hergestellte Klebbindung durch Ziehen an der Klebfolie in Richtung der Verklebungsebene lösbar ist. Mit solchen Klebfolie lassen sich hohe Klebkräfte und Scherfestigkeiten erzielen und Klebverbunde ohne weitere Hilfsmittel wieder lösen, vergleichbar dem Öffnen eines Weckglases, ähnlich wie dort die Gummidichtung am Anfasser aus der Dichtungsfuge gezogen wird.

Ferner beschreibt DE 37 14 453 C1 einen zerstörungsfrei von Übungsobjekten wieder abnehmbaren Übungssprengkörper, der mit solch einer Klebfolie reversibel befestigt wird.

Auch WO 92/11333 beschreibt unter anderem Klebfolien für entsprechende Anwendungen, wobei die eingesetzten Klebfolien eine geringe Elastizität bei gleichzeitig hoher Dehnung aufweisen.

DE 42 22 849 C1 beschreibt ebenfalls einen Streifen einer Klebfolie dieser Art mit einem besonders ausgestalteten Anfasser.

Schließlich beschreiben DE 42 33 872 C2 und WO 94/21157 wiederablösbare selbstklebende Haken, die ebenfalls mit derartigen Klebfolien ausgerüstet und also wiederablösbar sind.

Die in den vorgenannten Druckschriften dargestellten Klebstoffsysteme weisen jedoch auch eine Anzahl von Nachteilen auf:
- Um die Klebfolie aus der Klebfuge herauslösen zu können, muß ein Teil derselben in Form eines Anfassers aus dieser hervortreten. Die Klebfolie ist damit notwendigerweise bei der Verklebung nicht flexibler Gegenstände nicht völlig unsichtbar, sondern der Anfasser ist sichtbar, welches optisch unvorteilhaft erscheinen kann und bei Verwendung von Materialien, welche unter Lichteinfluß altern, auch zu technischen Problemen führen kann.
- Beim Verkleben kann es leicht dazu kommen, daß die gesamte Klebfolie, also inklusive Anfasser, in der Klebfuge verschwindet. Besonders dem Laien kann dies passieren, wenn er einen Abschnitt einer solchen Klebfolie nicht so am Rande des Substrates plaziert, daß ein Anfasser übersteht und dann aus der Klebfuge herausragt. Beim Lösen der Verklebung ist dann guter Rat teuer und ein Zerstören zumindest des einen Substrates kann die Folge sein.
- Tritt ein Reißen der Klebfolien beim Ablöseprozeß auf und verbleibt ein gerissener Klebfolienteil vollständig in der Klebfuge, so ist eine rückstandsfreie Trennung der verklebten Materialien ohne Zerstörung der Verklebungspartner zumeist nicht mehr möglich, welches einen erheblichen Schaden verursachen kann.

So bleibt es ein ungelöstes Problem, wie denn wertvolle oder solche Gegenstände, die unbeschädigt bleiben sollen, insbesondere nicht angebohrt werden sollen, reversibel, rückstandsfrei wiederlösbar und beschädigungslos zu befestigen seien. Etwa eine Kinder-Glasmalerei soll vorübergehen aufgehängt werden, eine dekorative Kachel, oder aber auch noch schwerere Gegenstände, und zwar möglichst ohne sichtbare Anfasser oder dergleichen überstehende oder aus der Klebfuge herausragende Fremdkörper. Aufgabe der Erfindung war es, hier Abhilfe zu schaffen.

Demgemäß betrifft die Erfindung die Verwendung von eingangs beschriebenen Klebfolien-abschnitten, wie dies in den Patentansprüchen näher gekennzeichnet ist, ebenso die dort näher gekennzeichneten Klebverbunde.

Bezüglich der einzusetzenden Klebfolien-Abschnitte wird auf den zitierten Stand der Technik verwiesen.

Die Ablösung der verklebten Gegenstände wird dabei durch die Dehnung des doppelseitigen Haftklebebandes erreicht. Der auftretende Adhäsionsverlust wird durch Verringerung der Klebrigkeit der Haftklebemasse analog DE 33 31 016 bzw. DE 42 22 849 begünstigt, sowie durch die Reduktion der Klebfoliendicke, verursacht durch die Dehnung der Klebstoff-Folie.

Bei Verwendung von Klebfolien-Abschnitten mit einem Zwischenträger kommen insbesondere Produkte vom Typus wie in WO 92/11333 in Betracht.

Die Erzeugungsmöglichkeit der nicht haftklebrigen Bereiche für Anfasser sind vielfältig. Sie kann z.B. durch Inertisierung der Haftklebemasse mittels eines nicht klebrigen Lackes erfolgen. Weitere Möglichkeiten umfassen das Zukaschieren von dünnen Schichtmaterialien wie Kunststoff-Folien und Papieren.

Als Deckpapier oder Trennlaminate eignen sich die übliche Trennfolien und Trennpapiere, z.B. silikonisierte Trennfolien/Trennpapiere, welche üblicherweise als gut trennende flächige Medien gegenüber Haftklebemassen eingesetzt werden.

Generell sei zu Herstellung, Verarbeitung und Handhabung von den besonders bevorzugten Klebfolien auf DE 33 31 016, DE 42 22 849 und WO 92/11333 verwiesen.

In den folgenden Beispielen soll die Erfindung anhand von Ausführungsbeispielen beschrieben werden, ohne sie damit unnötig einschränken zu wollen.

Es zeigen:
- Fig. 1-3: einen vorbekannten Klebeverbund
- Fig. 4: eine Platte, wie sie erfindungsgemäß mit einem Klebfolien-Abschnitt ausgerüstet verwendet wird
- Fig. 5: einen Klebverbund gemäß Fig. 4, schematisch seitlich
- Fig. 6: einen Gegenstand, ausgerüstet mit einem Klebverbund gemäß Fig. 5, schematisch seitlich
- Fig. 7: eine Hakenplatte, schematisch seitlich, die gemäß
- Fig. 8: an einer Wand angeklebt und mit einem ausgerüsteten Gegenstand gemäß Fig. 6 zusammengebracht wird, schematisch seitlich, und
- Fig. 9: einen fertigen derartigen Verbund, ebenfalls schematisch seitlich.

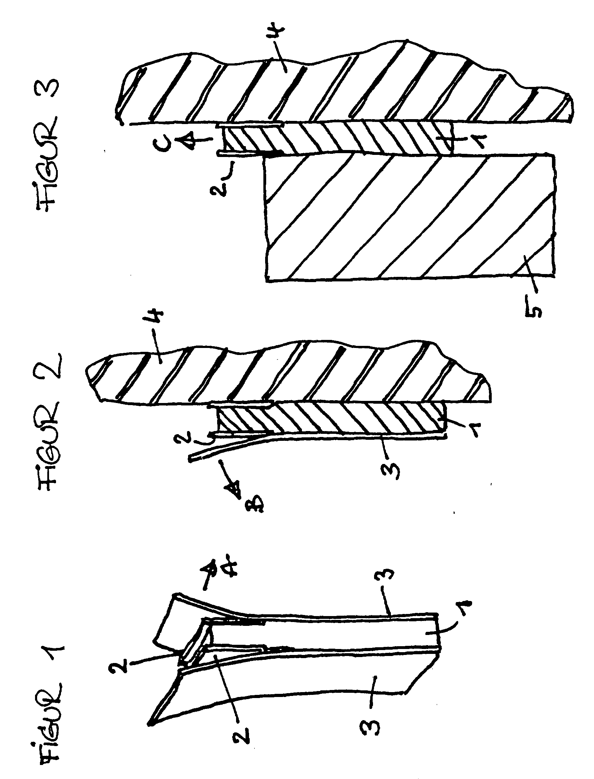

Fig. 1 zeigt einen bekannten Klebfolien-Abschnitt, wie er unter der Bezeichnung "Power Strips" ® im Handel ist. Dieser besteht aus einer Klebmasse 1 mit einem Anfasser 2, nämlich beiderseits am einen Ende der Klebmasse 1 angeordneten Abdeckungen, sowie jeweils einem Deckpapier 3 auf den beiden Seiten der Klebemasse 1. Zieht man das eine Deckpapier 3 in Richtung des Pfeiles A ab, so liegt die eine Seite der Klebmasse 1 frei. Mit dieser Klebseite kann der Klebfolien-Abschnitt auf einen Untergrund, etwa eine Wand 4 aufgeklebt werden, wie in Fig. 2 dargestellt. Nun kann das andere Deckpapier 3 in Richtung des Pfeiles B abgezogen werden, und die darunter befindliche Klebseite liegt frei. Auf ihr kann ein Gegenstand 5 so angeklebt werden, daß der Anfasser 2 aus der Klebfuge hervorsteht. Eine feste, belastbare und dauerhafte Verklebung ist erreicht, die jedoch durch Ziehen an dem Anfasser 2 in Richtung des Pfeiles C, wie in Fig. 3 dargestellt, rückstandsfrei wieder lösbar ist. Lediglich der Gegenstand 5 ist festzuhalten oder zu sichern, damit er schlußendlich nicht herabfällt und kaputt geht.

Das in Fig. 1 bis 3 Dargestellte ist Stand der Technik.

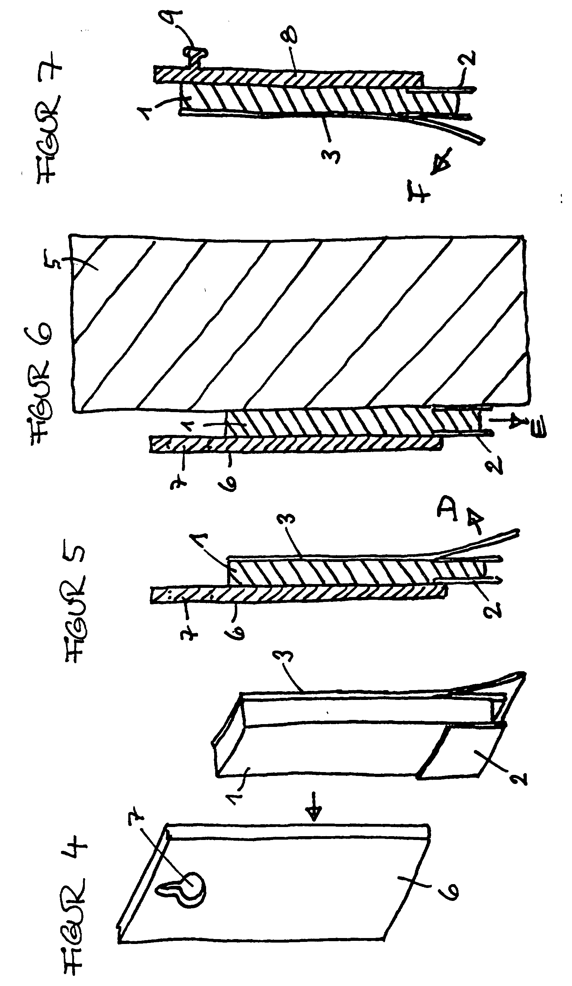

Fig. 4 und folgende zeigen demgegenüber erfindungsgemäße Ausführungsformen. So ist in
Fig. 4 zunächst wiederum ein bekannter Klebfolien-Abschnitt aus Klebmasse 1, Anfasser 2 und Deckpapier 3 dargestellt, von dem das eine Deckpapier gemäß dem in Fig. 1 erläuterten Abschnitt bereits abgezogen ist. Mit der Seite, auf der also die Klebmasse 1 freiliegt, wird der Klebfolien-Abschnitt auf eine Platte 6 geklebt. Diese Platte 6 weist ein Schlitzloch 7 auf, das dabei frei bleibt. In der Seitenansicht dieses Klebeverbundes gemäß Fig. 5 ist dargestellt, wie das Deckpapier 3 in Richtung des Pfeiles D abgezogen werden kann, um dann diesen Klebverbund seinerseits auf einen Gegenstand 5 aufzukleben, Fig. 6. Diesen Verbund kann man nun über das Schlitzloch 7 aufhängen oder befestigen, etwas indem eine Schnur durch das Schlitzloch 7 gezogen wird, um daran den Verbund aufzuhängen, oder indem etwa der Verbund über das Schlitzloch 7 auf den Kopf eines eingeschlagenen Nagels, einer Schraube oder dergleichen geschoben und daran aufgehängt wird. Damit ist ein fester Verbund gewährleistet, der auch bei gewichtigem Gegenstand 5 zuverlässig aufgehängt werden kann, ohne daß dabei auch nur ein Teil der Klebanordnung zu sehen wäre. Zudem ist ein rückstandsfreies, beschädigungsloses Trennen des Verbundes möglich, indem der Verbund zunächst wieder abgehängt wird und dann am Anfasser 2 in Richtung des Pfeiles E gezogen wird. Dabei bleibt der Gegenstand 5 unbeschädigt zurück, ebenso die Platte 6, die mit einem frischen Klebfolien-Abschnitt zusammen erneut verwendet werden kann.

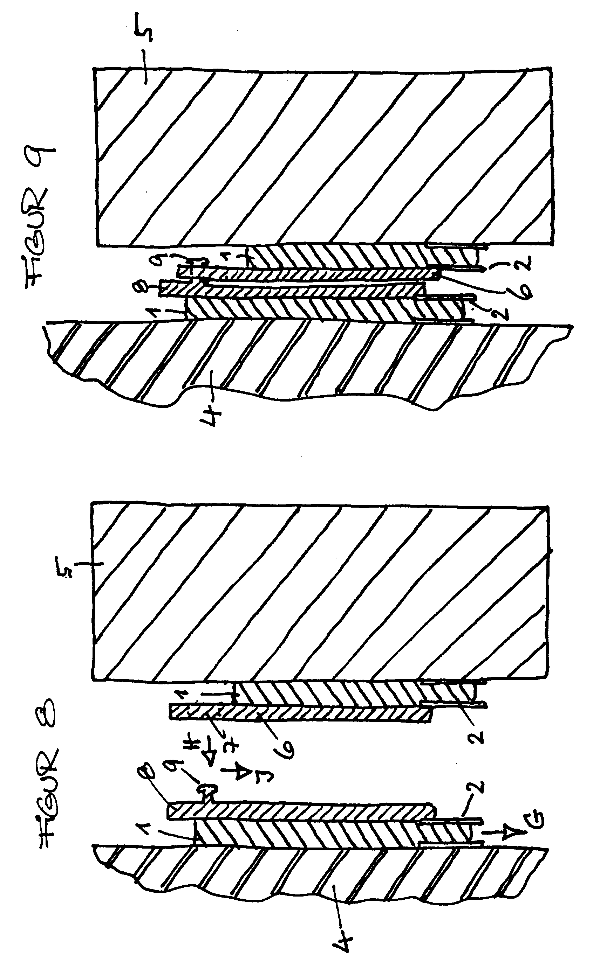

Eine weitere Ausgestaltung ist in Fig. 7 folgende dargestellt, gemäß der ein Klebfolien-Abschnitt mit Klebmasse 1, Anfasser 2 und Deckpapier 3 auf eine Hakenplatte 8 aufgeklebt ist., gemäß DE 42 33 872 C. Die Hakenplatte 8 weist einen vorstehenden Haken 9 auf, der in das Schlitzloch 7 in einer Platte 6 (Fig. 4) paßt, wobei zunächst der Haken 9 in das Loch des Schlitzlochs 7 eingeführt und dann mit seinem dünneren Teil des Hakens 9 in den Schlitzteil des Schlitzlochs 7 schiebbar ist, so daß der Haken 9 damit gegen ein ungewolltes Herausziehen aus dem Schlitzloch 7 gesichert ist. Von diesem Klebverbund wird die Abdeckung 3 in Richtung des Pfeils F abgezogen und der Klebverbund wird nun auf eine Wand oder dergleichen geklebt, wie dies in Fig. 8 dargestellt ist. Dort sitzt er fest und stark belastbar, ist jedoch bei Bedarf leicht und rückstandsfrei wieder ablösbar, indem man an dem vorstehenden Anfasser 2 in Richtung des Pfeils G zieht. Die Hakenplatte 8 ist danach wieder verwendbar und kann mit einem neuen Klebfolien-Abschnitt ausgerüstet und eingesetzt werden. Auf die vormontierte Hakenplatte 8 gemäß Fig. 8 läßt sich nun ein gemäß Fig. 6 vormontierter Verbund aus Gegenstand 5 mit aufgeklebtem Klebfolien-Abschnitt aus Klebmasse 1 und Anfasser 2 und darauf aufgeklebter Platte 6 mit Schlitzloch 7 aufstecken, zunächst in Richtung des Pfeils J. In umgekehrter Weise ist diese Steckverbindung auch wieder lösbar. In Fig. 9 ist der so zusammengesteckte Verbund aufgehängt an der Wand 4 dargestellt, wobei die Art und Weise der Befestigung und Aufhängung nicht sichtbar, gleichwohl beschädigungslos und rückstandsfrei für alle Teile trennbar ist, wobei die Hakenplatte 8 und die Platte 6 erneut verwendet werden können.

Geeignete Materialien für die Platte 6 und die Gegenhalterung, wie die Hakenplatte 8, sind Kunststoff (transparent oder undurchsichtig; Polyolefine, wie PE, PP, PS; Polyester; PMMA; Polycarbonat; PVC; Resopal etc.; ebenso Holz und lackiertes Holz oder Glas und Metall.

Das erfindungsgemäße Verfahren kann so erfolgen, daß eine Vorrichtung zum Befestigen, wie etwa eine Öse oder ein Schlitzloch 7 einer Platte 6 zum Befestigen einer Schnur oder dergleichen oberhalb des zu befestigenden Gegenstandes herausragt, insbesondere kann diese Platte 6 aber "verdeckt" angeklebt werden.

### Beispiel 1

Eine bemalte Glasplatte von rechteckiger Form (Abmessungen 18cm x 12cm) wird rückseitig mit zwei Klebeösen versehen, welche eine Fixierung selbiger über zwei daran befestigte Nylonschnüre erlaubt.

Die Klebeösen bestehen aus je einem rechteckigen 0,8mm dicken PMMA-Streifen der Abmessungen 65mm x 25mm. An einem Ende verfügen die PMMA-Streifen über eine Lochung, welche jeweils 12,5mm mit ihrem Zentrum von den Seiten und einem Ende des PMMA-Streifens entfernt ist. Die PMMA-Streifen verfügen ferner über eine integrierte Klebfolie der Abmessungen 50mm x 20mm. Die Klebfolie ist derart auf die dem gelochten Ende des PMMA-Streifens gegenüber liegenden Seite befestigt, daß der Anfasser (14mm x 20mm) der gelochten Seite des PMMA-Streifens gegenüber liegt und 10mm über dessen Unterkante herausreicht. Die Klebfolie ist mit einem abhäsiv ausgerüsteten Trennpapier abgedeckt (vgl. Fig. 4). Verwendet werden hier und in den folgenden Beispielen "Power Strips" ® der Beiersdorf AG, Hamburg.

Zur Applikation der Klebeösen auf die Glasplatte werden von zwei Klebeösen die Trennpapiere abgelöst. Danach werden die Klebeösen derart links und rechts auf der Rückseite der Glasplatten verklebt, daß die Lochung ca. 10mm oberhalb der Oberkante der Glasplatte zu liegen kommt.

Mittels vorgenannter Klebeösen läßt sich die bemalte Glasplatte leicht über zwei Nylonfäden an einem an einer Wand befestigten Metallhaken befestigen.

Zum rückstandsfreien Entfernen der Klebeösen von der Rückseite der Glasplatte wird die Glasplatte von der Wand abgenommen und die Klebfolie ausgehend vom Anfasserstreifen durch Herausziehen parallel zur Verklebungsebene herausgezogen. Steht ein neuer Klebstreifen zur Verfügung, so kann der Klebeösenbasiskörper wiederverwendet werden.

### Beispiel 2

Eine Messingplatte von ellipsoider Form der Abmessungen 30cm (maximaler Durchmesser) x 18cm (minimaler Durchmesser) wird derart mit einer Klebeöse entsprechend Beispiel 1 versehen, daß diese komplett hinter der Messingplatte verdeckt angebracht werden. Über ein Nylonband läßt sich die Messingplatte an einen in einer Wand applizierten Haken befestigen, welcher sich oberhalb der Messingplatte befindet. Zum Lösen der Klebeösen von der Messingplatte verfährt man wie in Beispiel 1.

### Beispiel 3

Die Messingplatte aus Beispiel 2 wird direkt über die Lochung der Klebeöse auf einem in der Wand befindlichen Haken befestigt. Hierbei bleiben sowohl die Klebeöse als auch der in der Wand befindliche Haken unsichtbar hinter der Messingplatte.

## Patentansprüche

1. Verfahren zum verdeckten Verkleben mittels eines Klebfolien-Abschnittes für eine rückstandsfreie und beschädigungslos wiederablösbare Verklebung, wobei a) eine Platte (6) an einem zu fixierenden oder aufzuhängenden Gegenstand (5) mittels b) einer doppelseitig klebenden Klebfolie (1) mit einem aus der Klebfuge herausragenden Anfasser (2), an dem durch Ziehen in Richtung der Verklebungsebene die Verklebung lösbar ist, verklebt wird, wobei c) die Platte (6) eine Vorrichtung (7) aufweist, an der eine Fixierung oder Aufhängung in an sich bekannter Weise ansetzen kann, und wobei d) die Verklebung für den Betrachter des so fixierten oder aufgehängten Gegenstands (5) durch den Gegenstand (5) selbst verdeckt erfolgt, indem die Fixierung oder Aufhängung mittels der Vorrichtung (Öse, Schlitzloch) (7) an der Platte (6) an einer Gegenhalterung (8) erfolgt, mit einer daran befindlichen und der Vorrichtung (Öse, Schlitzloch) (7) entsprechenden Ausgestaltung (9), wobei die Gegenhalterung (8) mittels eines durch Ziehen in Richtung der Verklebungsebene lösbaren Klebfolien-Abschnittes wiederlösbar befestigt ist.

2. Verfahren nach Anspruch 1, dadurch gekennzeichnet, dass der Klebfolien-Abschnitt mit oder ohne Zwischenträger elastisch oder plastisch dehnbar ist.

3. Verfahren nach Anspruch 1, dadurch gekennzeichnet, dass die Adhäsion des Klebfolien-Abschnittes geringer als die Kohäsion ist, das Haftvermögen beim Dehnen weitgehend verschwindet und das Verhältnis von Abzugskraft zu Reißlast mindestens 1 : 1,5 ist.

4. Verfahren nach Anspruch 1, dadurch gekennzeichnet, dass der Klebfolien-Abschnitt ein solcher auf Basis von thermoplastischem Kautschuk und klebrigmachenden Harzen ist, mit hoher Elastizität und geringer Plastizität.

5. Verfahren nach Anspruch 1, dadurch gekennzeichnet, dass die Platte (6) flach ausgestaltet ist und in ihrem oberen Bereich eine Öse oder ein Schlitzloch aufweist.

6. Verfahren nach Anspruch 1, dadurch gekennzeichnet, dass die Platte (6) flach ausgebildet ist und in ihrem oberen Bereich einen Haken aufweist.

7. Verfahren nach Anspruch 1, dadurch gekennzeichnet, dass die Platte (6) und gegebenenfalls die Gegenhalterung (8) wiederverwendbar sind.

## Claims

1. Method for hidden bonding by means of a piece of adhesive film for a bond which can be separated again without damage and without leaving a residue, a) a plate (6) is bonded to an article (5) to be mounted or hung up is bonded by means of b) a double-sided adhesive film (1) having a tab (2) which projects from the adhesive join and which can be pulled in the direction of the bond plane to separate the bond, where c) the plate (6) has a device (7) via which mounting or hanging can take place in a manner known per se, and where d) the bonding is hidden to the viewer of the mounted or hung article (5) by the article (5), itself in that the mounting or hanging by means of the device (eye or slotted hole) (7) on the plate (6) takes place on a counterholder (8) which has a shaped piece (9) corresponding to the device (eye or slotted hole) (7), where the counterholder (8) is attached in a redetachable manner by means of a piece of adhesive film which can be detached by pulling in the direction of the bond plane.

2. Method according to Claim 1, characterized in that the piece of adhesive film is elastically or plastically stretchable with or without a backing.

3. Method according to Claim 1, characterized in that the adhesion of the piece of adhesive film is lower than the cohesion, the adhesive strength substantially disappears on stretching, and the ratio between peel force and tear strength is at least 1:1.5.

4. Method according to Claim 1, characterized in that the piece of adhesive film is based on thermoplastic rubber and tackifying resins, with high elasticity and low plasticity.

5. Method according to Claim 1, characterized in that the plate (6) is flat and has an eye or slotted hole in its upper region.

6. Method according to Claim 1, characterized in that the plate (6) is flat and has a hook in its upper region.

7. Method according to Claim 1, characterized in that the plate (6) and, if used, the counterholder (8) are reusable.

## Revendications

1. Procédé pour le collage masqué au moyen d'une portion de film adhésif pour un collage détachable sans résidus et sans dégâts, dans lequel a) une plaque (6) est collée à un objet (5) à fixer ou à suspendre au moyen b) d'un film adhésif (1) à double face avec un onglet (2) sortant du joint de collage, par lequel le collage est détachable en tirant dans la direction du plan de collage, dans lequel c) la plaque (6) présente un dispositif (7) sur lequel une fixation ou une suspension peut se placer de façon connue en soi, et dans lequel d) le collage est masqué aux yeux de l'observateur de l'objet (5) ainsi fixé ou suspendu par l'objet (5) lui-même, parce que la fixation ou la suspension se fait au moyen du dispositif (oeillet, trou à boutonnière) (7) de la plaque (6) sur un contre-support (8) avec une configuration (9) existant sur celui-ci et correspondant au dispositif (oeillet, trou à boutonnière) (7), le contre-support (8) étant fixé de façon détachable au moyen d'une portion de film adhésif détachable en tirant dans la direction du plan de collage.

2. Procédé suivant la revendication 1, caractérisé en ce que la portion de film adhésif est extensible élastiquement ou plastiquement avec ou sans support intermédiaire.

3. Procédé suivant la revendication 1, caractérisé en ce que l'adhérence de la portion de film adhésif est inférieure à la cohésion, le pouvoir adhésif disparaît largement lors de l'extension et le rapport de la force de traction à la charge de rupture est au moins de 1 : 1,5.

4. Procédé suivant la revendication 1, caractérisé en ce que la portion de film adhésif est à base de caoutchouc thermoplastique et de résines collantes, avec une élasticité élevée et une faible plasticité.

5. Procédé suivant la revendication 1, caractérisé en ce que la plaque (6) est de forme plate et présente dans sa région supérieure un oeillet ou un trou à boutonnière.

6. Procédé suivant la revendication 1, caractérisé en ce que la plaque (6) est de forme plate et présente un crochet dans sa région supérieure.

7. Procédé suivant la revendication 1, caractérisé en ce que la plaque (6) et éventuellement le contre-support (8) sont réutilisables.
